# EUROPEAN PATENT SPECIFICATION

(11) **EP 3 663 595 B1**
(45) Date of publication and mention of the grant of the patent: **13.09.2023**
(21) Application number: 19213581.2
(22) Date of filing: 04.12.2019
(51) Int. Cl.: F16B 12/20, A47B 47/00

(54) **DEVICE FOR MAINTAINING THE POSITION OF A PANEL OF A PIECE OF FURNITURE WITH RESPECT TO A BASE AND METHOD FOR ASSEMBLING A PIECE OF FURNITURE**
VORRICHTUNG ZUR AUFRECHTERHALTUNG DER POSITION EINER PLATTE EINES MÖBELSTÜCKS IN BEZUG AUF EINEN SOCKEL UND VERFAHREN ZUM ZUSAMMENBAU EINES MÖBELSTÜCKS
DISPOSITIF POUR MAINTENIR LA POSITION D'UN PANNEAU D'UN MEUBLE PAR RAPPORT À UNE BASE ET PROCÉDÉ D'ASSEMBLAGE D'UN MEUBLE

(30) Priority: 05.12.2018 IT 201800010821
(43) Date of publication of application: 10.06.2020
(73) Proprietor: CAR S.r.l., 35127 Padova (IT)
(72) Inventor: ROVOLETTO, Stefano, 35127 Padova (IT)
(74) Representative: Anselmi, Davide

(56) References cited:
- EP-A2- 0 691 478
- WO-A1-2019/125291
- WO-A2-2012/131603
- DE-A1- 2 546 750
- DE-A1-102016 119 629
- DE-C1- 3 338 976
- FR-A5- 2 172 552
- GB-A- 2 163 825
- US-A- 4 984 926

## Description

### TECHNICAL FIELD

The present invention relates to a backrest-lock for maintaining the position between two panels of a piece of furniture. In particular, the invention relates to a device for insertion interposed between the backrest and the base of a piece of furniture to compensate for the structural tolerances with which the components of the piece of furniture itself are produced. In detail, the invention proposes to reduce the gap between the backrest and the width of the groove formed in the base.

In addition, the invention relates to a piece of furniture on which the aforesaid device is installed.

Moreover, the invention relates to a method for assembling a piece of furniture.

### PRIOR ART

Generally, commonly used furniture is constituted by two lateral panels (which act as uprights), an upper panel, a lower panel (which acts as the base), one or more panels which can be opened and a rear panel (commonly called backrest).

Some furniture, for example cabinets and chests of drawers, envisage that the rear panel is made to slide in suitable grooves formed on at least one component of the piece of furniture (usually on the lower panel and the side panels) to then be locked in this position, for example with the interposition of a plurality of nails, along at least one side of the rear panel, usually along the sides of the upper panel that overlap the respective thickness of the side panels.

However, this procedure is not reversible and makes it practically impossible to remove and refit the rear panel without damaging it and without damaging the other components of the piece of furniture, for example in the case in which the piece of furniture must be moved when moving house. In addition, the interposition of nails is a lengthy and difficult procedure and tends to damage the components of the piece of furniture. In this regard, therefore, instead of the use of nails, it is known to interpose specific stop devices (shims) between the rear panel and the lower panel (or the upper/side panel) of the piece of furniture to confer a greater solidity to the entire structure and maintain the rear panel in a specific fixed and integral position with respect to the lower panel (or to the upper/side panel), avoiding perforating the piece of furniture itself. These devices are substantially shims that are inserted in suitable holes or directly between the rear panel and the base to lock the latter in position. According to some embodiments illustrated in documents WO2012131603A2, DE2546750 and

EP0691478, as such devices are inserted between two adjacent panels within specific communicating housings, they are able to rotate between a disengaging configuration and a constraining configuration of the panels. In this constraining configuration the threads present on the surface form grooves and cuts along the panel with which they are in contact so as to define a shape coupling able to firmly maintain the panels therebetween. In other embodiments, instead, the devices inserted in the groove are U-shaped and have a lower base configured so that the rear panel is superimposed thereon. However, the presence of this base provides that during the assembly step the device is strictly inserted before the panel.

In addition, the presence of the base envisages creating a blind hole up to a greater depth with respect to the groove, going to further narrow the lower panel and weaken the structure.

Generally, moreover, the devices have a projecting tab shaped to make it easy for the operator to move them from a free position to a constraining position.

However, this tab may not be easily accessible during the assembly since in known devices it is normally located behind the rear panel facing towards the installation wall since the tab, if placed internally, might be cumbersome for the placement of the user's personal objects or could become entangled with the possible items of clothing stored therein.

### SUMMARY

In this context, the technical task underlying the present invention is to propose a backrest-lock device for maintaining (locking) the position of a panel of a piece of furniture with respect to a base of the same piece of furniture which overcomes the drawbacks of the prior art mentioned above. In particular, an object of the present invention is to provide a device of the backrest-lock type which is easy to use during installation.

In detail, an object of the present invention is to provide a backrest-lock type device shaped so as to define an end stop in the passage from the free position to the constraining position in which it locks the mutual position between two panels of a piece of furniture.

Another object of the present invention is to provide a backrest-lock type device which is easily rotatable between the free position and the constraining position.

A further object of the present invention is to provide a backrest-lock type device which lacks projecting and bulky external appendices that can cause damage to the piece of furniture or to that which is placed therein.

An object of the present invention is also to provide a backrest-lock type device shaped so that it can be arranged and/or removed between two panels of a piece of furniture in any moment during assembly (even before the insertion of the rear panel).

Moreover, an object of the present invention is to provide a piece of furniture in which the aforesaid backrest-lock type device can be interposed between two panels to define a strong and resistant structure.

Finally, an object of the present invention is to provide a method for assembling the aforesaid piece of furniture.

The stated technical task and specified objects are substantially achieved by a backrest-lock type device, by a piece of furniture provided with the device and by a method for assembling the piece of furniture, which comprise the technical features disclosed in the independent claims. The dependent claims correspond to further advantageous aspects of the invention.

It should be highlighted that this summary introduces, in simplified form, a selection of concepts which will be further elaborated in the detailed description given below.

The invention relates to a device for maintaining the position of a panel of a piece of furniture with respect to a base of the same piece of furniture. This device comprises a main body which extends along an axis of extension thereof for a predetermined length between its lower end and its upper end between which a side wall facing the exterior extends.

In detail, the side wall has a first portion and a second portion arranged consecutively to the first portion according to a direction of rotation of the main body around its own axis of extension. In greater detail, the second portion is, at least in part, projecting to a greater degree with respect to the first portion in a radial direction with respect to the axis of extension in such a way that the main body is advantageously rotatable around the same axis of extension between a first operating position and a second operating position. In the first operating position the first portion, in use, is turned towards the panel of the piece of furniture, while in the second operating position the second portion, in use, is abutted against the panel of the piece of furniture.

More precisely, the part of the second portion of the side wall is the part projecting to a greater degree with respect to the rest of the second portion at least at the lower end.

In other words, the device is shaped so as to be rotatably interposed between a panel and a base of a piece of furniture, which are generally arranged perpendicular to each other. In its first operating position the device is simply interposed between the panel and the base so that its portion projecting to a greater degree is not turned towards the panel. Instead, following the rotation of the device around its own axis of extension in its second operating position, the projecting portion abuts the panel, imparting a constant thrust thereon and maintaining it in a stable position with respect to the base. In this way, the device is advantageously able to compensate the constructive tolerances with which the panel and the base of the piece of furniture are produced.

In addition, the invention relates to a piece of furniture which comprises a base on which a groove is present and a hole arranged adjacent and communicating with the groove, a panel inserted into the groove perpendicularly with respect to the base and the previously introduced backrest-lock type device. This device is arranged in the hole of the base in the first operating position and is rotatable in the second operating position to maintain the panel in position with respect to the base of the piece of furniture. Moreover, the device, in its entirety, is arranged side-by-side with respect to the panel.

Generally, in fact, the groove on the base of the piece of furniture has a width slightly greater than the thickness of the panel, so as to allow an easy insertion of the latter inside it. This entails that the position of the panel is not completely stable and affected by possible slight misalignments. The interposition of the device is advantageously able to compensate for these constructive differences, stably abutting the panel to the base, thereby defining a mutual positioning that is constant in time. Even more advantageously, the device is able to compensate for constructive tolerances that reach values of 1.5 millimetres (i.e. the difference between the thickness of the panel and the width of the groove is compensated up to values equal to 1.5 millimetres).

Finally, the present invention relates to a method for assembling the piece of furniture that comprises the operating steps of:
- preparing a base on which there is a groove and a hole adjacent to and communicating with the groove;
- preparing a rear panel;
- inserting the rear panel into the groove;
- arranging the previously described device in the hole in the first operating position so that it is positioned completely side-by-side with the panel;
- rotating the device in the second operating position to maintain the position of the panel with respect to the base stable in time.

Advantageously, the device is shaped in such a way that its positioning can take place both before and after the insertion of the panel inside the groove.

In this way, an operator can also position the device in a later moment in the case in which there has been an oversight during assembly.

### BRIEF DESCRIPTION OF THE DRAWINGS

Additional features and advantages of the present invention will become more apparent from the indicative and thus non-limiting description of a preferred but not exclusive embodiment of a device for maintaining the position of a panel of a piece of furniture with respect to a base of the same piece of furniture as illustrated in the appended drawings, in which:
- figure 1 shows a perspective view of a backrest-lock device which can be interposed between two panels of a piece of furniture to maintain their mutual positioning;
- figure 2 shows a side view of the device shown in figure 1;
- figure 3 shows a further perspective view of the device shown in figure 1;
- figure 4 shows a view from above of the device shown in figure 1;
- figure 5 shows a perspective view of the device interposed between a base and a panel of the piece of furniture configured in a first operating position;
- figure 6 shows a view from above of the device interposed between a base and a panel of the piece of furniture configured in the first operating position;
- figure 7 shows a perspective view of the device interposed between the base and the panel of the piece of furniture configured in a second operating position;
- figure 8 shows a view from above of the device interposed between a base and a panel of the piece of furniture configured in the second operating position.

With reference to the drawings, they serve solely to illustrate embodiments of the invention with the aim of better clarifying, in combination with the description, the inventive principles at the basis of the invention.

### DETAILED DESCRIPTION

The invention relates to a (backrest-lock) device for maintaining the position of a panel of a piece of furniture with respect to a base of the same piece of furniture.

With reference to the figures, the backrest-lock device has been generically indicated with the number 1.

The other numerical references refer to technical features of the invention which, barring indications otherwise or evident structural incompatibilities, the person skilled in the art will know how to apply to all the variant embodiments described.

Any modifications or variants which, in the light of the description, are evident to the person skilled in the art, must be considered to fall within the scope of protection established by the present invention, according to considerations of technical equivalence.

In the present detailed description which is explanatory of the invention and therefore not limiting, reference will be made mainly to the interposition of the backrest-lock type device between a panel (for example a rear panel) and a base of a piece of furniture. However, the device described herein is shaped so as to be interposed between any two panels of a piece of furniture.

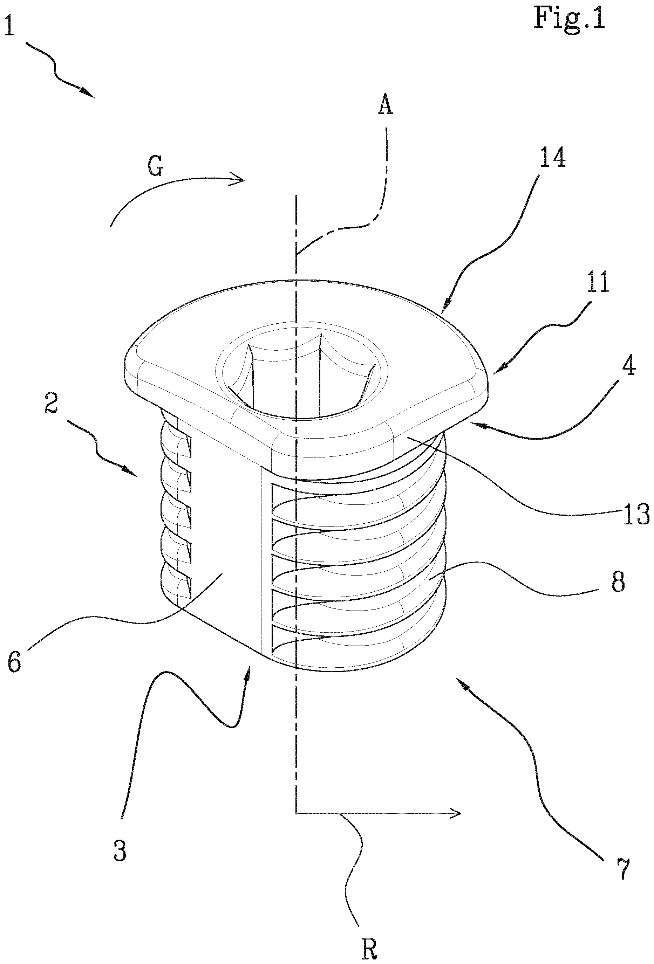

Figure 1 shows a device 1 for maintaining the position of a panel 101 of a piece of furniture with respect to a base 102 of the same piece of furniture. This device 1 comprises a main body 2 which extends along a (vertical) axis of extension A thereof for a predetermined length between its lower end 3 and its upper end 4 between which a side wall 5 facing the exterior extends. According to the invention, the side wall 5 has a first portion 6 and a second portion 7 arranged consecutively to the first portion 6 according to a direction of rotation G of the main body 2 around the axis of extension A thereof. In detail, the second portion 7 is projecting, at least in part, to a greater degree with respect to the first portion 6 according to a radial direction R with respect to the axis of extension A so that the main body 2 is rotatable around the same axis of extension A between a first operating position, wherein the first portion 6, in use, is turned towards the panel 101 of the piece of furniture, and a second operating position, wherein the second portion 7, in use, is abutted against the panel 101 of the piece of furniture. More precisely, the part of the second portion of the side wall 5 is the part projecting to a greater degree with respect to the rest of the second portion 7 at least at the lower end 3. During use of the device 1, the part of the second portion of the side wall 5 extends inside (so as to protrude) the internal volume of a groove 103 of the piece of furniture described below. According to the invention, the first portion 6 of the side wall 5 is substantially planar. In this way, when the device 1 is in the first operating position, the first portion 6 faces the panel 101 without inducing particular impediments (e.g. excessive friction) to the next possible rotation of the main body 2 in the second operating position. Preferably, the first portion 6 is parallel to the panel 101.

In general, the first portion 6 must project to a lesser degree than the second portion 7 so that the device 1 can be interposed without impediments between the panels of the piece of furniture 100 in the first operating position. In other words, when the device 1 is in the first operating position, the first portion 6 must not come into contact with the panel 101 to the point of making the movement in the second operating position of the same device 1 difficult.

The first portion 6, therefore, must not create interference during the positioning of the device 1 between the panels of the piece of furniture or, alternatively if already positioned at a panel, must not create interference with the positioning of the additional panel to constrain in position. Preferably, the second portion 7 of the side wall 5 is substantially convex, and even more preferably, for the entire extension of the second portion 7 comprised between the lower end 3 and the upper end 4 of the main body 2.

When the device 1 is located in the second operating position, the second portion 7 abuts against the panel 101 impressing thereon a force such as to stabilise the positioning substantially perpendicular with the base 102 of the piece of furniture.

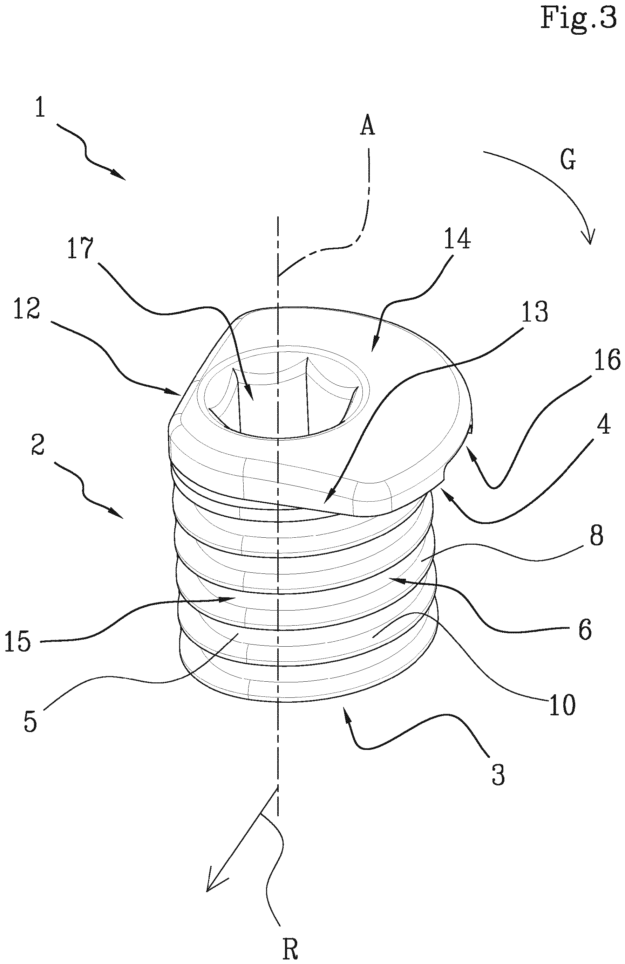

As can be seen in figures 1, 2, 3, 4, the first portion 6 and the second portion 7 are mutually angled at a substantially right angle according to the direction of rotation of the main body around the axis of extension. In this way, when the device 1 is in the first operating position, the first portion 6 is facing the panel 101 of the piece of furniture and the second portion 7 is substantially perpendicular to the same panel 101. Otherwise, when the device 1 is in the second operating position, the first portion 6 is arranged perpendicular to the panel 101 of the piece of furniture while the second portion 7 abuts against the same panel 101.

In this way, an operator only has to impart a rotation of the device 1 to an approximate right angle in order to be able to abut the second portion 7 of the side wall 5 against the panel 101 and define a stable position of the latter with the base 102.

According to the invention, the main body 2 of the device 1 comprises a plurality of projections 8 arranged on at least a part of the side wall 5 and at least at the second portion 7 so as to define on the latter the aforesaid part projecting to a greater degree. Even more preferably, each projection 8 is substantially annular and extends around the main body 2.

As can be seen in figures 1, 2, 3, the projections 8 are parallel to each other (vertically spaced) and extend along a direction which lies on a perpendicular plane with respect to the axis of extension A.

In other words, the projections 8 almost completely surround the side wall 5, in fact they are not present on the first portion 6, so as to define different points of retention to make the interposition of the device 1 between the panel 101 and the base 102 more stable.

According to the invention, each projection 8 has a lower surface 9 perpendicular to the axis of extension A and an upper surface 10 inclined towards the lower surface away from the side wall 5. In this way, each projection 8 has an asymmetrical shape, and more precisely a vertical section, with respect to its lying plane perpendicular to the axis of extension A.

This shape of each projection 8 has the advantage of preventing the device 1 from accidentally being extracted during its rotation around its axis of extension A. Even more advantageously, both when the device is rotated in the first direction of rotation V1 and when it is rotated in the second direction of rotation V2, the device 1 tends to move downwards along its own axis of extension A, maintaining a position interposed between the components of the piece of furniture.

According to one aspect of the invention, the device 1 comprises an end stop member 11 arranged at least at the second portion 7 of the side wall 5. In this way, the end stop member 11 defines the maximum angular opening useful for the rotation of the main body 2 between the first operating position and the second operating position.

Advantageously, therefore, once the device 1 is interposed in the first operating position between the panel 101 and the base 102 of the piece of furniture, the end stop member 11 defines the maximum rotation that an operator must induce to bring the device 1 into the second operating position. In fact, the shape of the device 1 advantageously prevents a rotation of an angle greater than that required.

In this regard, the end stop member 11 comprises a first flat section 12 and a second flat section 13 arranged adjacent and transversely to the first flat section 12, in such a way that both the first and the second flat sections 12,13 define, respectively, the end stop of the rotation of the main body 2 between the first operating position and the second operating position. In detail, the first flat section 12 is arranged at the upper end 4 of the main body 2 above the first portion 6 of the side wall 5, while the second flat section 13 is arranged at the upper end 4 of the main body 2 above the second portion 7. Preferably, the second flat section 13 extends in cantilever fashion beyond the second portion 7 according to a direction of counter-rotation. In the accompanying figures, the second flat section 13 projects (is recessed) to a lesser degree than the second portion 7.

According to the present invention, as better seen in figures 1, 2, 3, 4, the device 1 comprises a covering member 14 arranged at the upper end 4 of the main body 2. More precisely, the covering member 14 extends on a plane perpendicular to the axis of extension A, projecting beyond at least a third portion 15 of the side wall 5. Specifically, the third portion 15 is arranged consecutively to the second portion 7 along the direction of rotation G of the main body 2 around the axis of extension A, resulting comprised between the same second portion 7 and the first portion 6. Advantageously, the covering member 14 defines a further stop element according to a direction of insertion of the device 1 in a hole 104 formed on the base 102 of the piece of furniture so as to align the device 1 with respect to the hole 104 itself. In fact, in the case in which the hole 104 is formed incorrectly with a depth greater than necessary, the covering member 14, since it is projecting, abuts against the base 102 and defines an impediment against an excessive vertical translation along the axis of extension A.

In addition, the covering member 14 has a seat 16 below, preferably formed at a third curved section of the covering member 14 comprised between the second flat section 13 and the first flat section 12. The seat 16 is shaped to receive a suitable tool, such as for example a flat-blade screwdriver, to remove the device 1 from the hole 104 in which it is placed.

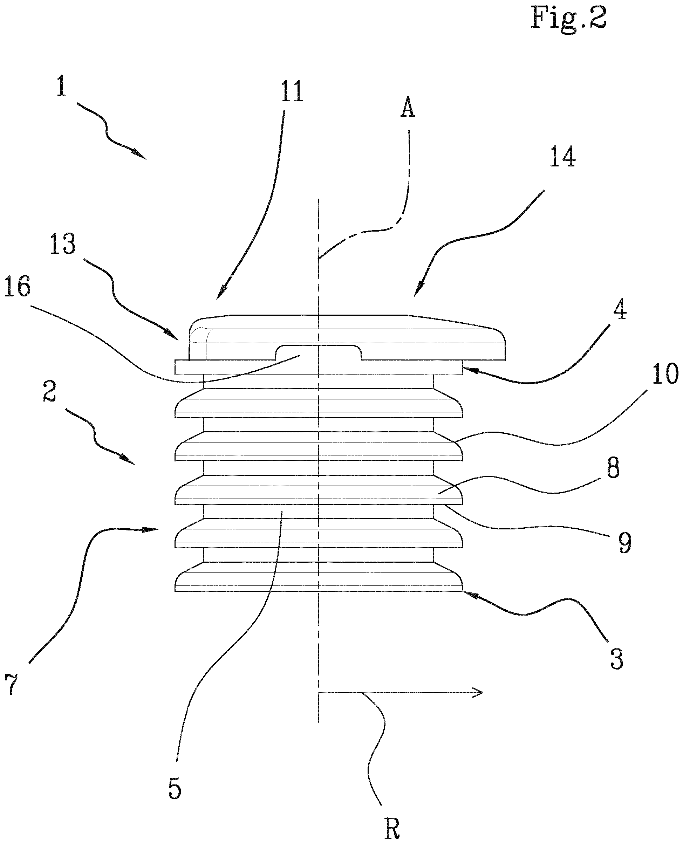

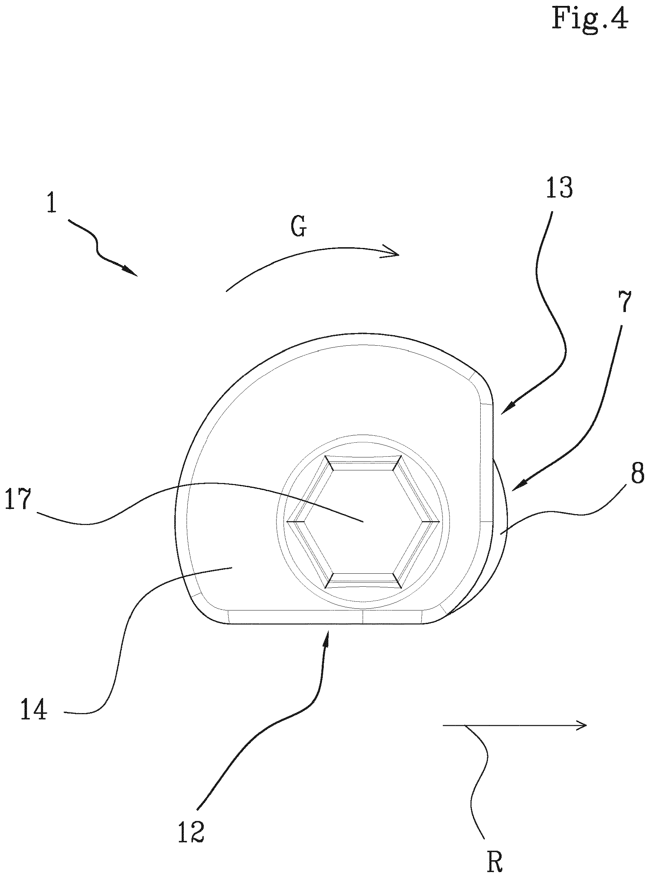

Preferably, as better seen in figure 2 and figure 4, the main body 2 has a cavity 17 shaped to receive a handling tool of the same main body 2 along the direction of rotation G around the axis of extension A.

Preferably, the cavity 17 is a blind cavity that extends from the upper end 4 of the main body 2 along the axis of extension A.

Advantageously, the hole 17 has a section transverse to the axis of extension A of hexagonal shape, so as to accommodate a typical Allen key useful for an operator to rotate the device 1 between the first operating position and the second operating position. Even more advantageously, having formed such a hole 17 allows not applying a tab or a fixed appendix to the device 1 which is needed to impart the rotation of the main body 2. The use of a tool, in this case an easily available Allen key, also allows the operator to more easily reach the device 1 in the case in which the working space for the operator is reduced to a minimum, for example in the case in which the piece of furniture is against the wall already during its assembly due to a lack of further space.

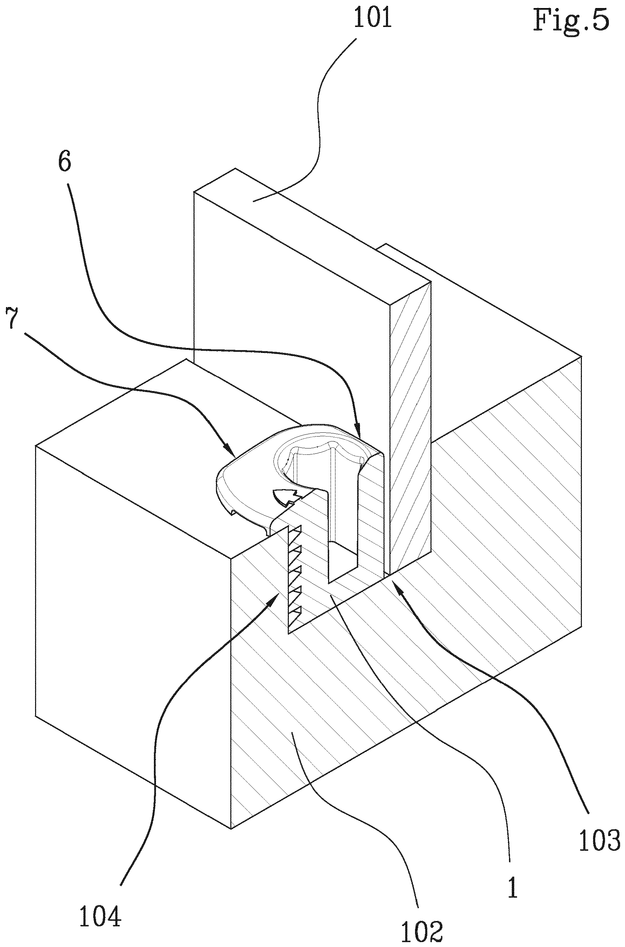

Figures 5, 6, 7, 8 show a portion of the piece of furniture to which the present invention is related. The piece of furniture comprises the base 102, the panel 101 and the device 1 described previously.

In detail, there is a groove 103 on the base 102 shaped to receive a portion of the panel 101, so as to arrange the latter perpendicularly with respect to the base 102. Moreover, the base 102 has the hole 104 arranged adjacent to and communicating with the groove 103. Generally, the hole 104 is formed in the part of the base 102 comprised between the groove 103 and the wall against which the piece of furniture will be placed once assembled.

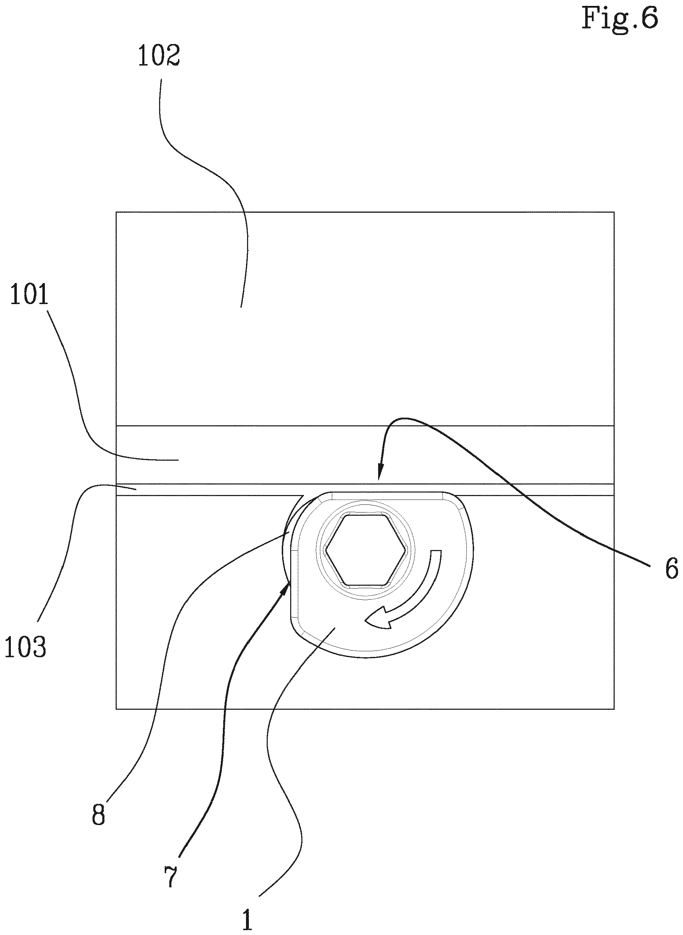

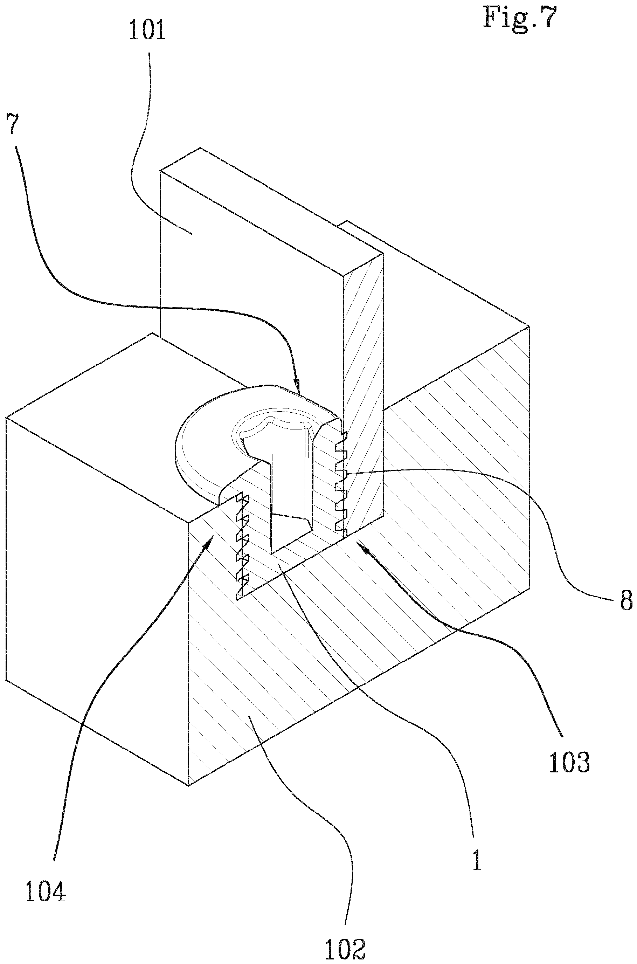

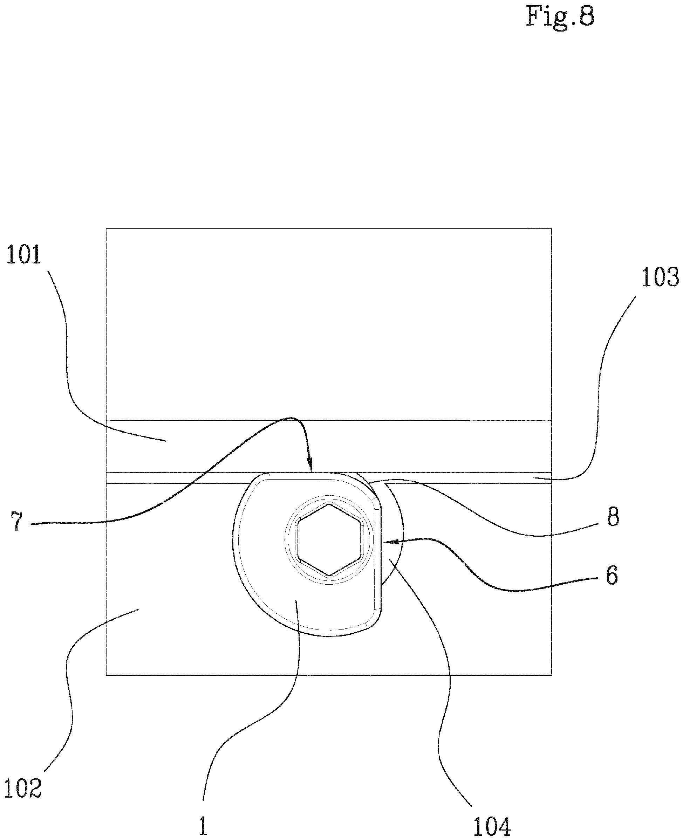

The device 1 is arranged inside the hole 104 in the first operating position (FIG.5 and FIG.6), which is rotatable in the second operating position (FIG.7 and FIG.8) to maintain the panel 101 in position with respect to the base 102 of the piece of furniture.

According to the invention, the device 1, in its entirety, is arranged completely side-by-side with the panel 101. In other words, when inserted in the hole 104, the entire main body 2 of the device 1 extends laterally to the panel 101. Advantageously, therefore, during its use the device 1 is arranged inside the hole 104 of the base 102 and laterally to the panel 101. Consequently, the device 1 is removable from the hole 104 also in the case in which the panel 101 is not separable from the base 102.

Preferably, therefore, the hole 104 and the groove 103 are formed on the base 102 with the same depth. In this way, the device 101 is inserted to the correct depth in the hole 104 also in the case in which the covering member 14 which carries out the function of vertical end stop is not present. Preferably, the hole 104 has a section transverse to the axis of extension A substantially equal to a transverse section of the main body 2 of the device 1 in such a way that the device 1, once inserted in the hole 104, remains stable in position due to the friction that is established between the plurality of projections 8 and the inner walls of the hole 104.

Lastly, the present invention also relates to a method for assembling a piece of furniture that derives directly from that which is described above and that which is referred below.

Initially, the base 102 on which the groove 103 and the hole 104 have been formed is prepared in a position adjacent to and communicating with the groove 103. In other words, no portion of the base is interposed between the hole 104 and the groove 103, such as for example a lamina that has not been removed, while a direct passage must instead be left free. Subsequently, the panel 101 is inserted inside the groove 103 so as to arrange it in a manner substantially perpendicular with respect to the base 102.

Finally, the device 1 can be inserted into the hole 104 in the first operating position so that it is entirely side-by-side with the panel 101 so that it can then be rotated in the second operating position so that the second portion abuts against the panel 101 in order to maintain the perpendicular position of the latter with respect to the base 102.

Advantageously, the insertion of the device 1 in the hole 104 can occur both before and after the insertion of the panel 101 inside the groove 103 since there are no lower elements inserted below the panel 101 itself.

## Claims

1. A device (1) for maintaining the position of a backrest panel (101) of a piece of furniture with respect to a base panel (102) of the same piece of furniture, comprising:
- a main body (2) extending along an axis of extension (A) thereof for a predetermined length between its lower end (3) and its upper end (4) between which a side wall (5) extends;
- said side wall (5) having a first portion (6) and a second portion (7) consecutive to said first portion (6) according to a direction of rotation (G) of said main body (2) around the axis of extension (A); said second portion (7) projecting, at least in part, to a greater degree with respect to said first portion (6) according to a radial direction (R) with respect to the axis of extension (A) so that the main body (2) is rotatable around said axis of extension (A) between a first operating position, wherein said first portion (6), in use, is turned towards the backrest panel (101) of the piece of furniture, and a second operating position, wherein said second portion (7), in use, is abutted against the backrest panel (101) of the piece of furniture; said part of the second portion (7) projecting to a greater degree with respect to the rest of said second portion (7) at least at said lower end (3);
**characterized in that** said device (1) is a backrest-lock configured for maintaining the position between the backrest panel (101) and the base panel (102) of a piece of furniture when the device (1) is located in the second operating position wherein the second portion (7) abuts against the backrest panel (101) impressing a force thereon such as to stabilise the positioning substantially perpendicular with the base panel (102) of the piece of furniture; said first portion (6) of said side wall (5) is substantially planar in such a way to not impede such a rotation of the main body (2) from the first operating position to the second operating position,
wherein said main body (2) has a plurality of projections (8) arranged on at least part of said side wall (5) at least at said second portion (7) to define, on the latter, said part projecting to a greater degree, each projection (8) having a lower surface (9) which is perpendicular to said axis of extension (A) and an upper surface (10) inclined towards said lower surface (9) away from said side wall (5), so that each projection (8) is asymmetric with respect to its own perpendicular lying plane with respect to said axis of extension (A).

2. The device (1) according to claim 1, wherein said second portion (7) of said side wall (5) is substantially convex, preferably for the entire extension comprised between said lower end (3) and said upper end (4) of the main body (2).

3. The device (1) according to any one of the preceding claims, wherein said first portion (6) and said second portion (7) are mutually angled at a substantially right angle according to the direction of rotation (G) of said main body (2) around the axis of extension (A) so that said first portion (6) is facing the backrest panel (101) of the piece of furniture in the first operating position and is perpendicular to the backrest panel (101) of the piece of furniture in the second operating position.

4. The device (1) according to any one of the preceding claims, wherein said projections (8) are parallel to each other and extending on at least a part of said side wall (5) along a direction lying on a perpendicular plane with respect to said axis of extension (A).

5. The device (1) according to any one of the preceding claims, comprising an end stop member (11) arranged at least at said second portion (7) of the side wall (5) so as to define a predefined angular opening for the rotation of the main body (2) between the first operating position and the second operating position.

6. The device (1) according to claim 5, wherein said end stop member (11) comprises at least one flat section (12, 13) arranged at the upper end (4) of the main body (2) above said second portion (7), wherein said flat section (12,13) extends in a projecting manner beyond the second portion (7) according to a direction of counter-rotation so as to define an end stop of the rotation of the main body (2) in the second operating position upon contact with the backrest panel (101).

7. The device (1) according to any one of the preceding claims, comprising a covering member (14) arranged at said upper end (4) of the main body (2) and extending on a perpendicular plane with respect to said axis of extension (A) and projecting beyond at least a third portion (15) of said side wall (5) consecutive to said second portion (7) according to said direction of rotation (G) of said main body (2) around the axis of extension (A); said third portion (15) being comprised between said second portion (7) and said first portion (6)

8. The device (1) according to any one of the preceding claims, wherein said main body (2) has a cavity (17) shaped to receive a handling tool of the main body (2) according to said direction of rotation (G) around said axis of extension (A).

9. The device (1) according to claim 8, wherein said cavity (17) is a blind cavity that extends from said upper end (4) along said axis of extension (A).

10. A piece of furniture comprising:
- a base panel (102) on which there is a groove (103) and a hole (104) adjacent to and communicating with said groove (103);
- a backrest panel (101) inserted into said groove (103) perpendicularly with respect to said base panel (102);
- a device (1) for maintaining the position of a backrest panel (101) of a piece of furniture with respect to a base panel (102) of the same piece of furniture comprising:
a main body (2) extending along an axis of extension (A) thereof for a predetermined length between its lower end (3) and its upper end (4) between which a side wall (5) extends;
said side wall (5) having a first portion (6) and a second portion (7) consecutive to said first portion (6) according to a direction of rotation (G) of said main body (2) around the axis of extension (A); said second portion (7) projecting, at least in part, to a greater degree with respect to said first portion (6) according to a radial direction (R) with respect to the axis of extension (A) so that the main body (2) is rotatable around said axis of extension (A) between a first operating position, wherein said first portion (6), in use, is turned towards the backrest panel (101) of the piece of furniture, and a second operating position, wherein said second portion (7), in use, is abutted against the backrest panel (101) of the piece of furniture; said part of the second portion (7) projecting to a greater degree with respect to the rest of said second portion (7) at least at said lower end (3), said first portion (6) of said side wall (5) is substantially planar in such a way to not impede such a rotation of the main body (2) from the first operating position to the second operating position;
wherein said main body (2) has a plurality of projections (8) arranged on at least part of said side wall (5) at least at said second portion (7) to define, on the latter, said part projecting to a greater degree, each projection (8) having a lower surface (9) which is perpendicular to said axis of extension (A) and an upper surface (10) inclined towards said lower surface (9) away from said side wall (5), so that each projection (8) is asymmetric with respect to its own perpendicular lying plane with respect to said axis of extension (A);
said device (1) being arranged in said hole (104) in the first operating position and rotatable in the second operating position to maintain said backrest panel (101) in position with respect to said base panel (102) of the piece of furniture; said device (1) being arranged completely side-by-side with respect to said backrest panel (101).

11. The piece of furniture according to claim 10, wherein said hole (104) and said groove (103) have the same depth.

12. A method for assembling a piece of furniture, comprising the operating steps of:
- preparing a base (102) panel on which there is a groove (103) and a hole (104) adjacent to and communicating with said groove (103);
- preparing a backrest panel (101);
- inserting said backrest panel (101) into said groove (103);
- preparing a device (1) for maintaining the position of a backrest panel (101) of a piece of furniture with respect to a base panel (102) of the same piece of furniture comprising:
a main body (2) extending along an axis of extension (A) thereof for a predetermined length between its lower end (3) and its upper end (4) between which a side wall (5) extends;
said side wall (5) having a first portion (6) and a second portion (7) consecutive to said first portion (6) according to a direction of rotation (G) of said main body (2) around the axis of extension (A); said second portion (7) projecting, at least in part, to a greater degree with respect to said first portion (6) according to a radial direction (R) with respect to the axis of extension (A) so that the main body (2) is rotatable around said axis of extension (A) between a first operating position, wherein said first portion (6), in use, is turned towards the backrest panel (101) of the piece of furniture, and a second operating position, wherein said second portion (7), in use, is abutted against the backrest panel (101) of the piece of furniture; said part of the second portion (7) projecting to a greater degree with respect to the rest of said second portion (7) at least at said lower end (3), said first portion (6) of said side wall (5) is substantially planar in such a way to not impede such a rotation of the main body (2) from the first operating position to the second operating position,
wherein said main body (2) has a plurality of projections (8) arranged on at least part of said side wall (5) at least at said second portion (7) to define, on the latter, said part projecting to a greater degree, each projection (8) having a lower surface (9) which is perpendicular to said axis of extension (A) and an upper surface (10) inclined towards said lower surface (9) away from said side wall (5), so that each projection (8) is asymmetric with respect to its own perpendicular lying plane with respect to said axis of extension (A);
- arranging said device (1) in said hole (104) in the first operating position so that it is positioned completely side-by-side with said backrest panel (101);
- rotating said device (1) in the second operating position to maintain the position of said backrest panel (101) with respect to said base panel (102) in such a way said second portion (7) to impress a force thereon against the backrest panel (101) such as to stabilise the positioning substantially perpendicular with the base panel (102) of the piece of furniture.

13. The method according to claim 12, wherein said step of arranging said device (1) is carried out after said step of inserting said backrest panel (101).

## Patentansprüche

1. Vorrichtung (1) zur Aufrechterhaltung der Position einer Rückenlehnenplatte (101) eines Möbelstücks in Bezug auf eine Sockelplatte (102) desselben Möbelstücks, umfassend
- einen Hauptkörper (2), der sich entlang einer Ausdehnungsachse (A) davon um eine vorgegebene Länge zwischen seinem unteren Ende (3) und seinem oberen Ende (4) erstreckt, zwischen denen sich eine Seitenwand (5) erstreckt,
- wobei die Seitenwand (5) einen ersten Abschnitt (6) und einen zweiten Abschnitt (7) aufweist, der auf den ersten Abschnitt (6) nach einer Rotationsrichtung (G) des Hauptkörpers (2) rund um die Ausdehnungsachse (A) folgt, wobei der zweite Abschnitt (7) mindestens teilweise in einem höheren Maß als der erste Abschnitt (6) nach einer radialen Richtung (R) in Bezug auf die Ausdehnungsachse (A) hervorsteht, sodass der Hauptkörper (2) rund um die Ausdehnungsachse (A) zwischen einer ersten Betriebsposition, in der der erste Abschnitt (6) in Verwendung hinführend zur Rückenlehnenplatte (101) des Möbelstücks gedreht wird, und einer zweiten Betriebsposition, in der der zweite Abschnitt (7) in Verwendung gegen die Rückenlehnenplatte (101) des Möbelstücks angeschlagen wird, drehbar ist, wobei der Teil des zweiten Abschnitts (7) zumindest am unteren Ende (3) in einem höheren Maß in Bezug auf den übrigen zweiten Abschnitt (7) hervorsteht,
**dadurch gekennzeichnet, dass** es sich bei der Vorrichtung (1) um eine Rückenlehnenverriegelung handelt, die ausgelegt ist, um die Position zwischen der Rückenlehnenplatte (101) und der Sockelplatte (102) eines Möbelstücks aufrechtzuerhalten, wenn die Vorrichtung (1) in der zweiten Betriebsposition befindlich ist, in der der zweite Abschnitt (7) gegen die Rückenlehnenplatte (101) anschlägt und auf diese eine Kraft ausübt, sodass die Positionierung im Wesentlichen rechtwinkelig zur Sockelplatte (102) des Möbelstücks stabilisiert wird, wobei der erste Abschnitt (6) der Seitenwand (5) im Wesentlichen ebenflächig ist, sodass eine derartige Drehung des Hauptkörpers (2) von der ersten Betriebsposition in die zweite Betriebsposition nicht verhindert wird,
wobei der Hauptkörper (2) eine Vielzahl von Vorständen (8) aufweist, die auf mindestens einem Teil der Seitenwand (5) mindestens am zweiten Abschnitt (7) angeordnet sind, um auf diesem den Teil zu definieren, der in einem höheren Maß hervorsteht, wobei ein jeder Vorstand (8) eine untere Oberfläche (9) aufweist, die rechtwinkelig zur Ausdehnungsachse (A) angeordnet ist, und eine obere Oberfläche (10), die hinführend zur unteren Oberfläche (9) wegführend von der Seitenwand (5) geneigt ist, sodass ein jeder Vorstand (8) in Bezug auf seine eigene rechtwinkelig liegende Ebene in Bezug auf die Ausdehnungsachse (A) asymmetrisch ist.

2. Vorrichtung (1) nach Anspruch 1, wobei der zweite Abschnitt (7) der Seitenwand (5) im Wesentlichen konvex ist, vorzugsweise über die gesamte Ausdehnung zwischen dem unteren Ende (3) und dem oberen Ende (4) des Hauptkörpers (2).

3. Vorrichtung (1) nach einem der vorhergehenden Ansprüche, wobei der erste Abschnitt (6) und der zweite Abschnitt (7) gegenseitig an einem im Wesentlichen rechten Winkel nach der Rotationsrichtung (G) des Hauptkörpers (2) rund um die Ausdehnungsachse (A) gewinkelt sind, sodass der erste Abschnitt (6) der Rückenlehnenplatte (101) des Möbelstücks in der ersten Betriebsposition zugewandt und in der zweiten Betriebsposition rechtwinkelig zur Rückenlehnenplatte (101) angeordnet ist.

4. Vorrichtung (1) nach einem der vorhergehenden Ansprüche, wobei die Vorstände (8) parallel zueinander angeordnet sind und sich auf mindestens einem Teil der Seitenwand (5) entlang einer Richtung erstrecken, die auf einer rechtwinkeligen Ebene in Bezug auf die Ausdehnungsachse (A) liegt.

5. Vorrichtung (1) nach einem der vorhergehenden Ansprüche, umfassend ein Endanschlagselement (11), das zumindest am zweiten Abschnitt (7) der Seitenwand (5) angeordnet ist, sodass es eine vorgegebene Winkelöffnung für die Drehung des Hauptkörpers (2) zwischen der ersten Betriebsposition und der zweiten Betriebsposition definiert.

6. Vorrichtung (1) nach Anspruch 5, wobei das erste Endanschlagselement (11) mindestens eine flache Sektion (12, 13) umfasst, die am oberen Ende (4) des Hauptkörpers (2) über dem zweiten Abschnitt (7) angeordnet ist, wobei sich die flache Sektion (12, 13) auf eine hervorstehende Weise jenseits des zweiten Abschnitts (7) nach einer Gegendrehungsrichtung erstreckt, sodass ein Endanschlag der Rotation des Hauptkörpers (2) in der zweiten Betriebsposition bei Kontakt mit der Rückenlehnenplatte (101) definiert wird.

7. Vorrichtung (1) nach einem der vorhergehenden Ansprüche, umfassend ein Abdeckelement (14), das am oberen Ende (4) des Hauptkörpers (2) angeordnet ist und sich auf einer rechtwinkeligen Ebene in Bezug auf die Ausdehnungsachse (A) erstreckt und jenseits von mindestens einem dritten Abschnitt (15) der Seitenwand (5) aufeinanderfolgend auf den zweiten Abschnitt (7) nach der Rotationsrichtung (G) des Hauptkörpers (2) rund um die Ausdehnungsachse (A) erstreckt, wobei der dritte Abschnitt (15) zwischen dem zweiten Abschnitt (7) und dem ersten Abschnitt (6) eingeschlossen ist.

8. Vorrichtung (1) nach einem der vorhergehenden Ansprüche, wobei der Hauptkörper (2) einen Hohlraum (17) aufweist, der ausgeformt ist, um ein Handhabungswerkzeug des Hauptkörpers (2) nach der Rotationsrichtung (G) rund um die Ausdehnungsachse (A) aufzunehmen.

9. Vorrichtung (1) nach Anspruch 8, wobei der Hohlraum (17) ein Blindhohlraum ist, der sich vom oberen Ende (4) entlang der Ausdehnungsachse (A) erstreckt.

10. Möbelstück, umfassend
- eine Sockelplatte (102), auf der eine Nut (103) und ein Loch (104), das angrenzend an die Nut (103) angeordnet ist und mit dieser kommuniziert, ausgebildet sind;
- eine Rückenlehnenplatte (101), die in die Nut (103) rechtwinkelig in Bezug auf die Sockelplatte (102) eingefügt ist;
- eine Vorrichtung (1) zur Aufrechterhaltung der Position einer Rückenlehnenplatte (101) eines Möbelstücks in Bezug auf eine Sockelplatte (102) desselben Möbelstücks, umfassend
- einen Hauptkörper (2), der sich entlang einer Ausdehnungsachse (A) davon um eine vorgegebene Länge zwischen seinem unteren Ende (3) und seinem oberen Ende (4) erstreckt, zwischen denen sich eine Seitenwand (5) erstreckt,
- wobei die Seitenwand (5) einen ersten Abschnitt (6) und einen zweiten Abschnitt (7) aufweist, der auf den ersten Abschnitt (6) nach einer Rotationsrichtung (G) des Hauptkörpers (2) rund um die Ausdehnungsachse (A) folgt, wobei der zweite Abschnitt (7) mindestens teilweise in einem höheren Maß als der erste Abschnitt (6) nach einer radialen Richtung (R) in Bezug auf die Ausdehnungsachse (A) hervorsteht, sodass der Hauptkörper (2) rund um die Ausdehnungsachse (A) zwischen einer ersten Betriebsposition, in der der erste Abschnitt (6) in Verwendung hinführend zur Rückenlehnenplatte (101) des Möbelstücks gedreht wird, und einer zweiten Betriebsposition, in der der zweite Abschnitt (7) in Verwendung gegen die Rückenlehnenplatte (101) des Möbelstücks angeschlagen wird, drehbar ist, wobei der Teil des zweiten Abschnitts (7) zumindest am unteren Ende (3) in einem höheren Maß in Bezug auf den übrigen zweiten Abschnitt (7) hervorsteht, wobei der erste Abschnitt (6) der Seitenwand (5) im Wesentlichen ebenflächig ist, sodass eine derartige Drehung des Hauptkörpers (2) von der ersten Betriebsposition in die zweite Betriebsposition nicht verhindert wird,
wobei der Hauptkörper (2) eine Vielzahl von Vorständen (8) aufweist, die auf mindestens einem Teil der Seitenwand (5) mindestens am zweiten Abschnitt (7) angeordnet sind, um auf diesem den Teil zu definieren, der in einem höheren Maß hervorsteht, wobei ein jeder Vorstand (8) eine untere Oberfläche (9) aufweist, die rechtwinkelig zur Ausdehnungsachse (A) angeordnet ist, und eine obere Oberfläche (10), die hinführend zur unteren Oberfläche (9) wegführend von der Seitenwand (5) geneigt ist, sodass ein jeder Vorstand (8) in Bezug auf seine eigene rechtwinkelig liegende Ebene in Bezug auf die Ausdehnungsachse (A) asymmetrisch ist;
wobei die Vorrichtung (1) im Loch (104) in der ersten Betriebsposition angeordnet ist und in die zweite Betriebsposition drehbar ist, um die Rückenlehnenplatte (101) in Bezug auf die Sockelplatte (102) des Möbelstücks in Position zu halten, wobei die Vorrichtung (1) vollständig neben der Rückenlehnenplatte (101) angeordnet ist.

11. Möbelstück nach Anspruch 10, wobei das Loch (104) und die Nut (103) die gleiche Tiefe aufweisen.

12. Verfahren zum Zusammenbau eines Möbelstücks, umfassend die folgenden Betriebsschritte:
- Vorbereiten einer Sockelplatte (102), auf der eine Nut (103) und ein Loch (104), das angrenzend an die Nut (103) angeordnet ist und mit dieser kommuniziert, ausgebildet sind;
- Vorbereiten einer Rückenlehnenplatte (101);
- Einfügen der Rückenlehnenplatte (101) in die Nut (103) ;
- Vorbereiten einer Vorrichtung (1) zur Aufrechterhaltung der Position einer Rückenlehnenplatte (101) eines Möbelstücks in Bezug auf eine Sockelplatte (102) desselben Möbelstücks, umfassend
- einen Hauptkörper (2), der sich entlang einer Ausdehnungsachse (A) davon um eine vorgegebene Länge zwischen seinem unteren Ende (3) und seinem oberen Ende (4) erstreckt, zwischen denen sich eine Seitenwand (5) erstreckt,
- wobei die Seitenwand (5) einen ersten Abschnitt (6) und einen zweiten Abschnitt (7) aufweist, der auf den ersten Abschnitt (6) nach einer Rotationsrichtung (G) des Hauptkörpers (2) rund um die Ausdehnungsachse (A) folgt, wobei der zweite Abschnitt (7) mindestens teilweise in einem höheren Maß als der erste Abschnitt (6) nach einer radialen Richtung (R) in Bezug auf die Ausdehnungsachse (A) hervorsteht, sodass der Hauptkörper (2) rund um die Ausdehnungsachse (A) zwischen einer ersten Betriebsposition, in der der erste Abschnitt (6) in Verwendung hinführend zur Rückenlehnenplatte (101) des Möbelstücks gedreht wird, und einer zweiten Betriebsposition, in der der zweite Abschnitt (7) in Verwendung gegen die Rückenlehnenplatte (101) des Möbelstücks angeschlagen wird, drehbar ist, wobei der Teil des zweiten Abschnitts (7) zumindest am unteren Ende (3) in einem höheren Maß in Bezug auf den übrigen zweiten Abschnitt (7) hervorsteht, wobei der erste Abschnitt (6) der Seitenwand (5) im Wesentlichen ebenflächig ist, sodass eine derartige Drehung des Hauptkörpers (2) von der ersten Betriebsposition in die zweite Betriebsposition nicht verhindert wird,
wobei der Hauptkörper (2) eine Vielzahl von Vorständen (8) aufweist, die auf mindestens einem Teil der Seitenwand (5) mindestens am zweiten Abschnitt (7) angeordnet sind, um auf diesem den Teil zu definieren, der in einem höheren Maß hervorsteht, wobei ein jeder Vorstand (8) eine untere Oberfläche (9) aufweist, die rechtwinkelig zur Ausdehnungsachse (A) angeordnet ist, und eine obere Oberfläche (10), die hinführend zur unteren Oberfläche (9) wegführend von der Seitenwand (5) geneigt ist, sodass ein jeder Vorstand (8) in Bezug auf seine eigene rechtwinkelig liegende Ebene in Bezug auf die Ausdehnungsachse (A) asymmetrisch ist;
- Anordnen der Vorrichtung (1) im Loch (104) in der ersten Betriebsposition, sodass sie vollständig neben der Rückenlehnenplatte (101) positioniert ist;
- Drehen der Vorrichtung (1) in die zweite Betriebsposition, um die Position der Rückenlehnenplatte (101) in Bezug auf die Sockelplatte (102) aufrechtzuerhalten, sodass der zweite Abschnitt (7) eine Kraft darauf gegen die Rückenlehnenplatte (101) ausübt, sodass die Positionierung im Wesentlichen rechtwinkelig zur Sockelplatte (102) des Möbelstücks stabilisiert wird.

13. Verfahren nach Anspruch 12, wobei der Schritt zum Anordnen der Vorrichtung (1) nach dem Schritt zum Einfügen der Rückenlehnenplatte (101) durchgeführt wird.

## Revendications

1. Dispositif (1) pour maintenir la position d'un panneau de dossier (101) d'un meuble par rapport à un panneau de base (102) du même meuble, comprenant :
- un corps principal (2) s'étendant le long d'un axe d'extension (A) de celui-ci sur une longueur prédéterminée entre son extrémité inférieure (3) et son extrémité supérieure (4) entre lesquelles s'étend une paroi latérale (5) ;
- ladite paroi latérale (5) ayant une première portion (6) et une deuxième portion (7) consécutive à ladite première portion (6) selon un sens de rotation (G) dudit corps principal (2) autour de l'axe d'extension (A) ; ladite deuxième portion (7) faisant saillie, au moins en partie, à un degré supérieur par rapport à ladite première portion (6) selon une direction radiale (R) par rapport à l'axe d'extension (A) de sorte que le corps principal (2) peut tourner autour dudit axe d'extension (A) entre une première position de fonctionnement, dans laquelle ladite première portion (6), en utilisation, est tournée vers le panneau de dossier (101) du meuble, et une deuxième position de fonctionnement, dans laquelle ladite deuxième portion (7), en utilisation, est en butée contre le panneau de dossier (101) du meuble ; ladite partie de la deuxième portion (7) faisant saillie à un degré supérieur par rapport au reste de ladite deuxième portion (7) au moins au niveau de ladite extrémité inférieure (3) ; **caractérisé en ce que** ledit dispositif (1) est un verrou de dossier configuré pour maintenir la position entre le panneau de dossier (101) et le panneau de base (102) d'un meuble lorsque le dispositif (1) est situé dans la deuxième position de fonctionnement dans laquelle la deuxième portion (7) en butée contre le panneau de dossier (101) en imprimant une force sur celui-ci de manière à stabiliser le positionnement sensiblement perpendiculaire au panneau de base (102) du meuble ; ladite première portion (6) de ladite paroi latérale (5) est sensiblement plane de manière à ne pas entraver une telle rotation du corps principal (2) de la première position de fonctionnement à la deuxième position de fonctionnement,
dans lequel ledit corps principal (2) a une pluralité de saillies (8) agencées sur au moins une partie de ladite paroi latérale (5) au moins au niveau de ladite deuxième portion (7) pour définir, sur cette dernière, ladite partie faisant saillie à un degré supérieur, chaque saillie (8) ayant une surface inférieure (9) qui est perpendiculaire audit axe d'extension (A) et une surface supérieure (10) inclinée vers ladite surface inférieure (9) à l'écart de ladite paroi latérale (5), de sorte que chaque saillie (8) est asymétrique par rapport à son propre plan d'appui perpendiculaire par rapport audit axe d'extension (A).

2. Dispositif (1) selon la revendication 1, dans lequel ladite deuxième portion (7) de ladite paroi latérale (5) est sensiblement convexe, de préférence pour toute l'extension comprise entre ladite extrémité inférieure (3) et ladite extrémité supérieure (4) du corps principal (2).

3. Dispositif (1) selon l'une quelconque des revendications précédentes, dans lequel ladite première portion (6) et ladite deuxième portion (7) sont mutuellement inclinées à un angle sensiblement droit selon la direction de rotation (G) dudit corps principal (2) autour de l'axe d'extension (A) de sorte que ladite première portion (6) fait face au panneau de dossier (101) du meuble dans la première position de fonctionnement et est perpendiculaire au panneau de dossier (101) du meuble dans la deuxième position de fonctionnement.

4. Dispositif (1) selon l'une quelconque des revendications précédentes, dans lequel lesdites saillies (8) sont parallèles les unes aux autres et s'étendent sur au moins une partie de ladite paroi latérale (5) le long d'une direction située sur un plan perpendiculaire par rapport audit axe d'extension (A).

5. Dispositif (1) selon l'une quelconque des revendications précédentes, comprenant un élément de butée d'extrémité (11) agencé au moins au niveau de ladite deuxième portion (7) de la paroi latérale (5) de manière à définir une ouverture angulaire prédéfinie pour la rotation du corps principal (2) entre la première position de fonctionnement et la deuxième position de fonctionnement.

6. Dispositif (1) selon la revendication 5, dans lequel ledit élément de butée d'extrémité (11) comprend au moins une section plate (12, 13) agencée à l'extrémité supérieure (4) du corps principal (2) au-dessus de ladite deuxième portion (7), dans lequel ladite section plate (12, 13) s'étend de manière saillante au-delà de la deuxième portion (7) selon une direction de contre-rotation de manière à définir une butée d'extrémité de la rotation du corps principal (2) dans la deuxième position de fonctionnement lors du contact avec le panneau de dossier (101).

7. Dispositif (1) selon l'une quelconque des revendications précédentes, comprenant un élément de recouvrement (14) disposé à ladite extrémité supérieure (4) du corps principal (2) et s'étendant sur un plan perpendiculaire par rapport audit axe d'extension (A) et faisant saillie au-delà d'au moins une troisième portion (15) de ladite paroi latérale (5) consécutive à ladite deuxième portion (7) selon ledit sens de rotation (G) dudit corps principal (2) autour de l'axe d'extension (A) ; ladite troisième portion (15) étant comprise entre ladite deuxième portion (7) et ladite première portion (6).

8. Dispositif (1) selon l'une quelconque des revendications précédentes, dans lequel ledit corps principal (2) a une cavité (17) formée pour recevoir un outil de manipulation du corps principal (2) selon ledit sens de rotation (G) autour dudit axe d'extension (A) .

9. Dispositif (1) selon la revendication 8, dans lequel ladite cavité (17) est une cavité borgne qui s'étend à partir de ladite extrémité supérieure (4) le long dudit axe d'extension (A).

10. Meuble comprenant :
- un panneau de base (102) sur lequel il y a une rainure (103) et un trou (104) adjacent à et communiquant avec ladite rainure (103) ;
- un panneau de dossier (101) inséré dans ladite rainure (103) perpendiculairement par rapport audit panneau de base (102) ;
- un dispositif (1) pour maintenir la position d'un panneau de dossier (101) d'un meuble par rapport à un panneau de base (102) du même meuble comprenant :
un corps principal (2) s'étendant le long d'un axe d'extension (A) de celui-ci sur une longueur prédéterminée entre son extrémité inférieure (3) et son extrémité supérieure (4) entre lesquelles s'étend une paroi latérale (5) ;
ladite paroi latérale (5) ayant une première portion (6) et une deuxième portion (7) consécutive à ladite première portion (6) selon un sens de rotation (G) dudit corps principal (2) autour de l'axe d'extension (A) ; ladite deuxième portion (7) faisant saillie, au moins en partie, à un degré plus important par rapport à ladite première portion (6) selon une direction radiale (R) par rapport à l'axe d'extension (A) de sorte que le corps principal (2) peut tourner autour dudit axe d'extension (A) entre une première position de fonctionnement, dans laquelle ladite première portion (6), en utilisation, est tournée vers le panneau de dossier (101) du meuble, et une deuxième position de fonctionnement, dans laquelle ladite deuxième portion (7), en utilisation, est en butée contre le panneau de dossier (101) du meuble ; ladite partie de la deuxième portion (7) faisant saillie à un degré supérieur par rapport au reste de ladite deuxième portion (7) au moins au niveau de ladite extrémité inférieure (3), ladite première portion (6) de ladite paroi latérale (5) est sensiblement plan de manière à ne pas entraver une telle rotation du corps principal (2) de la première position de fonctionnement à la deuxième position de fonctionnement ;
dans lequel ledit corps principal (2) a une pluralité de saillies (8) agencées sur au moins une partie de ladite paroi latérale (5) au moins au niveau de ladite deuxième portion (7) pour définir, sur cette dernière, ladite partie faisant saillie à un degré supérieur, chaque saillie (8) ayant une surface inférieure (9) qui est perpendiculaire audit axe d'extension (A) et une surface supérieure (10) inclinée vers ladite surface inférieure (9) à l'écart de ladite paroi latérale (5), de sorte que chaque saillie (8) est asymétrique par rapport à son propre plan perpendiculaire par rapport audit axe d'extension (A) ;
ledit dispositif (1) étant agencé dans ledit trou (104) dans la première position de fonctionnement et pouvant tourner dans la deuxième position de fonctionnement pour maintenir ledit panneau de dossier (101) en position par rapport audit panneau de base (102) du meuble ; ledit dispositif (1) étant agencé complètement côte à côte par rapport audit panneau de dossier (101).

11. Meuble selon la revendication 10, dans lequel ledit trou (104) et ladite rainure (103) ont la même profondeur.

12. Procédé d'assemblage d'un meuble, comprenant les étapes opérationnelles suivantes :
- préparer un panneau de base (102) sur lequel il y a une rainure (103) et un trou (104) adjacent à et communiquant avec ladite rainure (103) ;
- préparer un panneau de dossier (101) ;
- insérer ledit panneau de dossier (101) dans ladite rainure (103) ;
- préparer un dispositif (1) pour maintenir la position d'un panneau de dossier (101) d'un meuble par rapport à un panneau de base (102) du même meuble comprenant :
un corps principal (2) s'étendant le long d'un axe d'extension (A) de celui-ci sur une longueur prédéterminée entre son extrémité inférieure (3) et son extrémité supérieure (4) entre lesquelles s'étend une paroi latérale (5) ;
ladite paroi latérale (5) ayant une première portion (6) et une deuxième portion (7) consécutive à ladite première portion (6) selon un sens de rotation (G) dudit corps principal (2) autour de l'axe d'extension (A) ; ladite deuxième portion (7) faisant saillie, au moins en partie, à un degré supérieur par rapport à ladite première portion (6) selon une direction radiale (R) par rapport à l'axe d'extension (A) de sorte que le corps principal (2) est rotatif autour dudit axe d'extension (A) entre une première position de fonctionnement, dans laquelle ladite première portion (6), en utilisation, est tournée vers le panneau de dossier (101) du meuble, et une deuxième position de fonctionnement, dans laquelle ladite deuxième portion (7), en utilisation, est en butée contre le panneau de dossier (101) du meuble ; ladite partie de la deuxième portion(7) faisant plus saillie par rapport au reste de ladite deuxième portion (7) au moins au niveau de ladite extrémité inférieure (3), ladite première portion (6) de ladite paroi latérale (5) est sensiblement plan de manière à ne pas entraver une telle rotation du corps principal (2) de la première position de fonctionnement à la deuxième position de fonctionnement,
dans lequel ledit corps principal (2) a une pluralité de saillies (8) agencées sur au moins une partie de ladite paroi latérale (5) au moins au niveau de ladite deuxième portion (7) pour définir, sur cette dernière, ladite partie faisant saillie à un degré supérieur, chaque saillie (8) ayant une surface inférieure (9) qui est perpendiculaire audit axe d'extension (A) et une surface supérieure (10) inclinée vers ladite surface inférieure (9) à l'écart de ladite paroi latérale (5), de sorte que chaque saillie (8) est asymétrique par rapport à son propre plan perpendiculaire par rapport audit axe d'extension (A) ;
- disposer ledit dispositif (1) dans ledit trou (104) dans la première position de fonctionnement de sorte qu'il soit positionné complètement côte à côte avec ledit panneau de dossier (101) ;
- faire tourner ledit dispositif (1) dans la deuxième position de fonctionnement pour maintenir la position dudit panneau de dossier (101) par rapport audit panneau de base (102) de telle manière que ladite deuxième portion (7) imprime une force sur celui-ci contre le panneau de dossier (101) de manière à stabiliser le positionnement sensiblement perpendiculaire au panneau de base (102) du meuble.

13. Procédé selon la revendication 12, dans lequel ladite étape d'agencement dudit dispositif (1) est effectuée après ladite étape d'insertion dudit panneau de dossier (101).
